# EUROPÄISCHE PATENTSCHRIFT

(11) **EP 0 487 772 B1**
(45) Veröffentlichungstag und Bekanntmachung des Hinweises auf die Patenterteilung: **19.10.1994**
(21) Anmeldenummer: 90122740.5
(22) Anmeldetag: 28.11.1990
(51) Int. Cl.: A22C 17/00, A22C 17/04

(54) **Verfahren und Vorrichtung zum Aufbereiten von Fleisch**
Method and device for processing meat
Procédé et dispositif de traitement de viande

(43) Veröffentlichungstag der Anmeldung: 03.06.1992
(73) Patentinhaber: Hohenester, Hermann, Dr.med.vet., D-84508 Burgkirchen (DE)
(72) Erfinder: Hohenester, Hermann, Dr.med.vet., D-84508 Burgkirchen (DE)
(74) Vertreter: Kohlmann, Karl Friedrich, Dipl.-Ing.

(56) Entgegenhaltungen:
- EP-A- 0 179 973
- DE-A- 1 507 972
- DE-A- 2 032 774
- DE-A- 3 509 735
- DE-A- 3 844 301
- US-A- 2 199 088
- US-A- 2 840 849
- US-A- 4 567 050

## Beschreibung

Die vorliegende Erfindung betrifft ein Verfahren und eine Vorrichtung zum Aufbereiten von Fleisch, wie aus dem Dokument DE-A-1507972 bekannt, wobei das Fleisch in einem ersten Schritt zerkleinert und in einem anschließenden weiteren Schritt einem ein- oder mehrstufigen Trennvorgang unterzogen wird.

Zur Herstellung von Fleischprodukten ist es erforderlich, das Fleisch aufzubereiten. Diese Aufbereitung besteht darin, daß das eigentliche Muskelgewebe von Knochen, Bändern, Knorpeln, Faszien, Bindegewebe, Fett und dergleichen getrennt wird. Das auf diese Weise gewonnene, "reine" Muskelgewebe kann dann zu dem gewünschten Fleischprodukt weiterverarbeitet werden, während die abgetrennten Bestandteile in davon getrennten Arbeitsgängen für andere Zwecke aufbereitet, weiterverarbeitet oder entsorgt werden.

Das Trennen des Muskelgewebes von den oben genannten Bestandteilen bereitet in der Praxis erhebliche Probleme. Zwar sind die festen Bestandteile, wie beispielsweise die Knochen oder Knorpel noch relativ einfach und vollständig von den weichen Bestandteilen, wie dem Muskelgewebe und dem Fett zu trennen. Erheblich schwieriger ist es jedoch bereits, wenn relativ weiche Bestandteile, wie beispielsweise Fett, weiches Bindegewebe oder dergleichen Bestandteile von weichem Muskelgewebe getrennt werden sollen. Selbst unter Einsatz moderner Verfahrensweisen und Vorrichtungen läßt sich hierbei nur ein relativ unbefriedigender Abtrennungsgrad erzielen.

Eine gängige, bekannte Verfahrensweise besteht beispielsweise darin, in einem ersten Schritt eine Zerkleinerung des Fleisches einschließlich Knochen bzw. Knochenteile und anderer Bestandteile in einer Art Fleischwolf vorzunehmen, und das auf diese Weise zerkleinerte Gut zwischen einem Preßband und einer Siebtrommel hindurchzuführen (vgl. beispielsweise DE-OS 38 44 301 oder DE-AS 17 82 800). Bei diesem Vorgang entsteht durch die Zerkleinerung im Fleischwolf eine durchmischte Fleischmasse, deren weiche Bestandteile dann in einer Art passiervorgang über das Preßband durch die Perforation der Trommel hindurchgequetscht werden. Auf diese Weise können zwar Bestandteile weicher und härterer Konsistenz voneinander getrennt werden. Ein Separieren weicher Bestandteile voneinander, wie beispielsweise ein Auftrennen in Muskelgewebe, weichem Bindegewebe und Fett ist jedoch mit dieser Verfahrensweise nicht oder nur sehr unzulänglich möglich.

Um die Qualität des Trennvorganges zu verbessern, ist auch bereits vorgeschlagen worden, den an den Zerkleinerungsschritt anschließenden Verfahrensschritt der Auftrennung in der Weise mehrstufig auszugestalten, daß mehrere, jeweils mit einer abnehmenden Perforationsgröße ausgestattete Siebtrommel-Preßband-Einheiten hintereinander geschaltet werden (vgl. beispielsweise DE-OS 15 07 972). Ein derartiges mehrstufiges Durchpassieren oder Siebpressen erbringt zwar graduelle Verbesserungen. Eine zufriedenstellende Auftrennung bzw. Separierung in Muskelgewebe, Fettgewebe, Bindegewebe und harte Bindegewebs-Knorpel- und Knochenanteile ist jedoch auch auf diese Weise nicht möglich. Auch wird im vorgeschalteten Zerkleinerungsschritt und insbesondere beim anschließenden Trennschritt das Muskelgewebe aufgrund der Quetschvorgänge, hohen Drücken, Scherkräften und anderen mechanischen Belastungen ausgesetzt, die die Struktur des Muskelgewebes weitgehend zerstören, so daß kein hochwertiges Ergebnis erzielt werden kann.

Aufgabe der vorliegenden Erfindung ist es daher, eine vollkommen neuartige Verfahrensweise und Vorrichtung zur Verfügung zu stellen, die bei möglichst schonender Behandlung des Fleisches einen sehr hohen Abtrennungsgrad erzielt.

Diese Aufgabe wird erfindungsgemäß dadurch gelöst, daß das Zerkleinern im ersten Schritt durch ein Aufteilen des Fleisches in flächige Stücke bestimmter Dicke erfolgt, und daß in einem zwischen dem ersten Schritt und dem ein- oder mehrstufigen Trennvorgang liegenden zweiten Schritt ein auf diesen Trennvorgang abgestimmtes Aufschließen der flächigen Stücke vorgenommen wird, so daß ihre Struktur gezielt aufgebrochen wird.

Der Vorgang des "mechanischen Aufschließens" ist in der Fleischverarbeitung seit langem bekannt. Unter mechanischem "Aufschließen" wird eine mechanische Einwirkung auf das Fleisch verstanden, die die Struktur des Fleisches gezielt aufbricht. Auf diese Weise kann beispielsweise die Absorption von Konservierungsmitteln und/oder Würzstoffen (Fökellake) verbessert oder auch aufgrund der Festigkeitsreduzierung die "Zartheit" des Fleisches erhöht werden.

In der Praxis wird das mechanische Aufschließen von Fleisch unter anderem durch Walzensysteme erzielt, die Einschnitte, Einstiche, Einkerbungen oder dergleichen bis in eine vorbestimmte Tiefe in das Fleisch einbringen (vgl. beispielsweise DE-OS 35 09 735). Neben der bereits erwähnten verbesserten Absorption für Konservierungsmittel wird bei dieser bekannten Verfahrensweise auch eine verbesserte Bindung von mehreren Fleischstücken für die nachfolgende Verarbeitung bewirkt.

Erfindungsgemäß wird nun anstelle des üblichen Zerquetschens im ersten Schritt ein schonendes Aufteilen des Fleisches in flächige Stücke, wie Scheiben, Streifen oder Schnitzel vorgenommen. Erfindungsgemäß wird dann in einem auf dieses Aufteilen folgenden zweiten Schritt das in flächigen Stücken vorliegende Gut vor dem eigentlichen Trennvorgang gezielt in der Weise mechanisch aufgeschlossen, daß das "Aufschließmuster" genau auf das im daran anschließenden Trennvorgang eingesetzte "Muster" abgestimmt ist. Mit anderen Worten: Wird der Trennvorgang über eine Siebtrommel- oder Siebbandanordnung realisiert, ist das Einschneide-, Einkerb- oder Einstichmuster des mechanischen Aufschließvorganges genau auf das Perforationsmuster der Siebtrommel- oder Siebbandanordnung abgestimmt. Die Einschnitte oder Einstiche des mechanischen Aufschließvorgangs werden dabei so gelegt, daß ein Schnittraster entsteht, über das im anschließenden Trennvorgang jeder innerhalb der Schnitte liegende Fleischabschnitt schonend ausgepreßt werden kann. Dabei spielt die Art und die Konsistenz des Fleisches eine wesentliche Rolle. So kann beispielsweise im Falle eines Trennvorganges über eine Preßband-Siebtrommelanordnung bei gleichem Schnittmuster und gleichem Druck zartes Fleisch über eine kleinere Perforation ausgepreßt werden als weniger zartes oder zähes Fleisch, für das in jedem Falle eine größere Perforation erforderlich ist.

Versuche haben nun gezeigt, daß in dieser Weise abgestimmt aufgeschlossene flächige Fleischstücke sich im Trennvorgang erheblich wirkungsvoller und schonender aufbereiten lassen als mit bekannten Verfahrensweisen und Vorrichtungen. So wird bereits bei einem einstufigen Trennvorgang ein erheblich besserer Abtrennungsgrad erzielt als bei vergleichbaren Verfahrensweisen der bekannten Art. Ist der Trennvorgang dagegen mehrstufig ausgebildet, kann ein bisher nicht erreichbarer Abtrennungsgrad bei höchster Qualität erzielt werden.

Maßgeblich für den im Trennvorgang erzielbaren Abtrennungsgrad ist erfindungsgemäß die Abstimmung der Dicke der flächigen Fleischstücke auf den mechanischen Aufschließvorgang. Je nach Fleischart oder Konsistenz kann die optimale Dicke der flächigen Stücke durch Versuche festgelegt werden.

Grundsätzlich ist es möglich, den Trennvorgang über beliebig viele Stufen vorzunehmen. Besonders vorteilhafte Ergebnisse werden jedoch mit einem Trennvorgang erzielt, der sich über zwei oder drei Stufen erstreckt. In einem solchen Falle steht dem erreichten Abtrennungsgrad ein wirtschaftlich sinnvoller apparativer Aufwand gegenüber.

Im Falle eines zwei- oder dreistufigen Trennvorganges wird in der ersten Stufe aufgrund des vorgeschalteten, abgestimmten mechanischen Aufschließvorganges bei flächigen Stücken optimaler Dicke bereits die Hauptmenge von Muskelgewebe abgetrennt, so daß lediglich weiches Bindegewebe, Fettgewebe, Sehnen, Faszien, Bänder, Knochen und Knorpel verbleiben. In der zweiten Stufe erfolgt dann ein Abt rennen von Restmuskelgewebe, Fettgewebe und weichem Bindegewebe, wobei härteres Bindegewebe, Faszien, Bänder, Knochen und Knorpel verbleiben. Ist eine dritte Stufe nachgeschaltet, erfolgt in dieser ein weiteres Abtrennen von Restmuskelgewebe, Pestfett und weichem Restbindegewebe, so daß lediglich Sehnen, Knorpel und Knochen verbleiben. Im Falle des Einsatzes von bekannten Preßband-Siebtrommeleinheiten für die einzelnen Stufen ist es vorteilhaft, die auf den vorgeschalteten mechanischen Aufschließvorgang abgestimmten Perforationsöffnungen in jeder Stufe hinsichtlich ihres Querschnittes zu reduzieren.

Einen weiteren Parameter stellt der auf das zu verarbeitende Gut in jeder Stufe aufgebrachte Preßdruck dar. So haben Versuche gezeigt, daß es vorteilhaft ist, den Preßdruck von Stufe zu Stufe zu erhöhen.

Durch das mechanische Aufschließen wird es ermöglicht, im Trennvorgang auf das Fleisch nicht über einen längeren Zeitraum einen großflächigen Druck, sondern über einen kürzeren Zeitraum einen kleinflächigeren Druck auszuüben. Im Falle des Einsatzes von Walzen oder Preßband-Siebtrommelanordnungen ist es darüber hinaus vorteilhaft, nicht mit einem sogenannten Nullspalt, sondern mit einem gewissen Abstand zwischen den druckausübenden Flächen zu arbeiten. Im Falle des Einsatzes eines Preßbandes kann dies mit einer niedrigen Preßbandspannung erreicht werden.

Bei einem mehrstufigen Trennvorgang wiederum ist es zweckmäßig, zumindest den Abstand der druckausübenden Flächen in der ersten Stufe einstellbar und steuerbar auszubilden. Die optimalen Bedingungen können je nach Fleischart und Fleischkonsistenz durch Versuche festgelegt werden.

Der Abtrennungsgrad kann gemäß einer vorteilhaften Weiterbildung der Erfindung noch durch den Einsatz einer Zwischenstufe zwischen zwei Stufen verbessert werden. So ist es möglich, als Zwischenstufe beispielsweise eine Flotationsstufe einzusetzen, in der eine Auftrennung durch Flotation in Wasser oder in lebensmittelrechtlich zugelassenen Lösungen von Salzen und/oder Genußsäuren erfolgt.

Für bestimmte Anwendungsgebiete können als Zwischenstufe zum Feinseparieren gegebenenfalls auch Adhäsionstrennverfahren, Rütteltischtrennverfahren, Zentrifugaltrennverfahren oder gegebenenfalls auch Windsichtungsverfahren unter Ausnutzung des unterschiedlichen spezifischen Gewichtes von Fett und Muskelgewebe eingesetzt werden. Darüber hinaus ist es möglich, als Zwischenstufe elektronisch gesteuerte, optische Feinseparierverfahren einzusetzen, sofern eine Auftrennung nach Farbunterschieden möglich ist.

Eine vorteilhafte Vorrichtung zur Durchführung des erfindungsgemäßen Verfahrens umfaßt eine Schneideinrichtung zum Aufteilen des Fleisches in flächige Stücke bestimmter Dicke, eine an diese anschließende mechanische Aufschließeinrichtung die die Struktur der flächigen Stücke gezielt aufbricht und eine sich an diese Aufschließeinrichtung anschließende und darauf abgestimmte ein- oder mehrstufige Trenneinrichtung.

Grundsätzlich ist es möglich, für den Aufbau der Schneideinrichtung, der Aufschließeinrichtung und der Trenneinrichtung bekannte Elemente einzusetzen. Wesentlich ist allerdings, daß diese bekannten Elemente in aufeinander aufbauender und aufeinander abgestimmter und abstimmbarer Arbeitsweise derart ausgestaltet sind, daß eine Arbeitsweise gemäß dem erfindungsgemäßen Verfahren realisiert werden kann. Hinsichtlich der Abstimmung ist der Aufbau der Aufschließeinrichtung in bezug auf die Trenneinrichtung von besonderer Bedeutung, wie dies bereits im Zusammenhang mit dem erfindungsgemäßen Verfahren im einzelnen erläutert wurde.

Grundsätzlich können die Schneideinrichtung, die Aufschließeinrichtung und die Trenneinrichtung voneinander getrennt sein. Vorteilhaft ist es jedoch, wenn die Schneideinrichtung, die Aufschließeinrichtung und die Trenneinrichtung hintereinander geschaltet zu einer Maschineneinheit zusammengefaßt sind.

Die Schneideinrichtung kann in verschiedenster Weise konstruiert sein. Wesentlich ist, daß das Fleisch unter möglichst schonender Behandlung in flächige Stücke vorbestimmter Dicke aufgeteilt werden kann. Vorteilhaft ist es, als Schneideinrichtung einen Schneckenförderer mit ausgangsseitig vorgeschaltetem rotierendem Messer vorzusehen. Je nach Einsatzweck kann diesem rotierenden Messer ein sogenanntes Gattermesser vorgeschaltet sein.

Das rotierende Messer kann als Flügel- oder Scheibenmesser ausgestaltet sein. Der Antrieb kann gemäß einem bevorzugten Ausführungsbeispiel durch die Welle des Schneckenförderers erfolgen, die in einem solchen Fall als Hohlwelle ausgestaltet ist.

Die Schneideinrichtung kann auch als auf einer horizontalen Achse geführte und mit einem Transportband zusammenarbeitende Scheibenmesseranordnung ausgestaltet sein.

In speziellen Fällen kann es auch möglich sein, das Fleisch in gefrorenem Zustand zu schneiden. In solchen Fällen ist es vorteilhaft, wenn die Schneideinrichtung als Gefrierfleischblockschneider ausgebildet ist. Ein derartiger Gefrierfleischblockschneider kann beispielsweise als Säge- oder als Fräseinrichtung arbeiten.

Die mechanische Aufschließeinrichtung kann ebenfalls in verschiedenster Weise gestaltet sein. Vorteilhaft ist es, wenn die mechanische Aufschließeinrichtung einander gegenüberliegende und gegenläufig zueinander rotierende Aufschließwalzen aufweist.

Das Hindurchbewegen der flächigen Fleischstücke zwischen den Aufschließwalzen kann in verschiedenster Weise erfolgen. In den meisten Fällen reicht es aus, für eine Zu- und Abfuhr Sorge zu tragen, da die flächigen Fleischstücke durch die Aufschließwalzen selbst durch die Aufschließeinrichtung hindurchgefördert werden. Falls dies nicht der Fall sein sollte, ist es vorteilhaft, eine spezielle Transporteinrichtung vorzusehen. Für den Fall, daß die Achsen der Aufschließwalzen in einer horizontalen Ebene liegen, reicht in aller Regel die Schwerkraft aus, um die flächigen Fleischstücke in den Einzugsbereich der Aufschließwalzen zu bewegen.

Im Bedarfsfalle ist es möglich, lediglich eine Aufschließwalze vorzusehen, und diese mit einem Förderband zusammenarbeiten zu lassen, welches den erforderlichen Gegendruck erzeugt.

Um eine optimale Anpassung an das jeweils aufzuschließende Fleisch zu ermöglichen, ist es vorteilhaft, die Aufschließwalzen verstellbar bzw. zusammenstellbar auszubilden. Gemäß einem bevorzugten Ausführungsbeispiel bestehen die Aufschließwalzen aus Antriebswellen, auf denen axial nebeneinander eine Anzahl von Zahnscheiben angeordnet sind. Bei einer derartigen Anordnung ist es vorteilhaft, die Antriebswellen abstandsverstellbar nebeneinander anzuordnen, um den optimalen Arbeitsspalt zwischen den Aufschließwalzen durch Versuche bestimmen zu können. Aufgrund der Ausbildung der Aufschließwalzen aus einer Anzahl von Zahnscheiben ist es möglich, dem jeweiligen Anwendungszweck entsprechend Zahnscheibensätze aus verschiedenen Zahnscheiben zusammenzustellen.

Aus Zahnscheiben zusammengestellte Aufschließwalzen können darüber hinaus einfach gereinigt werden. Zu diesem Zweck werden die Zahnscheiben von den Antriebswellen abgezogen und in einem separaten Arbeitsgang einzeln gereinigt.

Diese Zahnscheiben besitzen an ihrem Umfang Einstich- oder Einschnittzähne, die gemäß einem vorgegebenen Aufschließmuster geformt und zueinander angeordnet sind.

Die Trenneinrichtung kann ebenfalls in verschiedenster Weise gestaltet sein. Sie kann ein- oder mehrstufig ausgebildet sein, wobei die Stufen gleichartig oder auch unterschiedlich ausgebildet sein können.

Ein besonders gutes Verhältnis zwischen Abscheidungsgrad und apparativem Aufwand ergibt sich bei einer zwei- oder dreistufigen Ausbildung der Trenneinrichtung.

Die einzelnen Stufen der Trenneinrichtung können als Preßband-Siebtrommeleinheit, Siebband-Preßtrommeleinheit, Siebtrommel-Siebtrommeleinheit oder Siebtrommel-Druckwalzeneinheit ausgestaltet sein. Darüber hinaus ist es möglich, die einzelnen Stufen der Trenneinrichtung als Drucktrommel-Siebtrommeleinheit auszugestalten. In einem solchen Fall läuft im Innenraum der Druck- oder Siebtrommel achsversetzt eine rotierende Sieb- oder Drucktrommel kleineren Durchmessers. Durch den Versatz der beiden Achsen wird zwischen der Innenfläche der äußeren Trommel und der Außenfläche der inneren Trommel ein Arbeitsspalt gebildet, der sich stetig verringert und im Anschluß daran wieder stetig erweitert.

Im Falle einer Siebtrommel-Druckwalzeneinheit liegt der Siebtrommel jeweils achsparallel eine Druckwalze gegenüber. Diese Druckwalze kann aus elastischem Material bestehen oder auch elastisch deformierbar ausgebildet sein.

Im Falle einer elastischen deformierbaren Ausbildung der Druckwalze ist es vorteilhaft, diese als hohlen Druckkörper zu gestalten, der auf seiner Innenseite mit einem Druckmedium beaufschlagbar ist. Bei einer derartigen Ausgestaltung erfährt die Druckwalze in ihrem der Siebtrommel gegenüberliegenden Druckbereich eine Deformation, die entsprechend der gewünschten Druckfläche sich über einen bestimmten Winkelbereich der Siebtrommel erstrecken kann. Vorteilhaft ist ein Winkelbeieich von etwa 30° bis 50°.

Das in den Innenraum der Siebtrommel gepreßte Fleisch kann grundsätzlich in jeder beliebigen Weise abgezogen werden. Hierzu eignen sich beispielsweise bekannte Schab- und Ausfördereinrichtungen. Gemaß seiner vorteilhaften Weiterbildung der Erfindung kann ein Abziehen des Fleisches von der Innenseite dar Siebtrommel auch über eine Saugeinrichtung erfolgen, die im Innenraum der Trommel im Bereich der Überdeckung durch die Druckwalzen angeordnet ist. Diese Saugeinrichtung kann in verschiedenster Weise ausgebildet sein. Vorteilhaft ist die Ausbildung als Saughaube, die einen bestimmten Sektor des Innenraumes abdeckt.

Die Trenneinrichtung kann auch als Zahntrommelanordnung ausgestaltet sein. In einem solchen Fall liegen zwei Zahntrommeln achsparallel zur Bildung eines Zahntrommelpaares gegenüber. Die Verzahnung der Zahntrommeln kann je nach Einsatzzweck gerad-, schräg- oder sogar pfeilverzahnt sein.

Die Verzahnung der Zahntrommeln kann in verschiedener Weise gestaltet sein. So können die Zähne einstückig mit der Zahntrommel ausgebildet sein. Vorteilhaft ist es auch, die Zähne der Zahntrommeln von Zahnleisten zu bilden, die auf den Trommelkörper aufgesetzt sind.

Wesentlich ist jedoch in all den geschilderten Fällen, daß im Zahngrund zwischen zwei Zähnen jeweils Öffnungen oder Schlitze vorgesehen sind, die mit dem Trommelinnenraum in Verbindung stehen. Insofern stellen derartige Zahntrommelanordnungen letztlich eine Siebtrommelanordnung mit speziell, d.h. zahnartig ausgestalteter Umfangfläche dar.

Grundsätzlich können die Öffnungen oder Schlitze in verschiedenster Weise ausgestaltet sein. Um einen möglichst reibungsfreien Durchtritt des Fleisches durch die Öffnungen oder Schlitze zu erreichen, ist es vorteilhaft, die Öffnungen oder Schlitze zum Trommelinnenraum hin erweitert auszubilden. Zweckmäßig ist es, die Erweiterung im wesentlichen konisch zu gestalten.

Besondere Bedeutung kommt auch der Gestaltung der Öffnungen oder Schlitze im Bereich des Überganges zur Trommelumfangsfläche zu. Dem jeweiligen Anwendungszweck entsprechend kann dieser Übergang beispielsweise gerundet oder auch nach Art einer Schneide ausgebildet sein.

Im Falle einer Zahntrommelanordnung ist es zweckmäßig, die Zahntrommeln im Abstand voneinander anzuordnen, d.h. zwischen den einander zugewandten Zahnsystemen einen "wellenförmigen" Arbeitsspalt zu bilden.

Vorteilhaft ist es, in einem solchen Fall die Zahntrommeln synchron jeweils derart anzutreiben, daß einer Zahnspitze der einen Trommel ein Zahngrund der benachbarten Trommel gegenüberliegt. Das Fleisch wird auf diese Weise jeweils von der Zahnspitze der einen Trommel durch die Öffnungen oder Schlitze im Zahngrund der jeweils benachbarten Trommel hindurchgequetscht, wodurch sich ein abwechselnd von verschiedenen Seiten auf die flächigen Fleischstücke einwirkender, quasi pulsierender Quetsch- oder Passiervorgang ergibt.

Im folgenden sind zur weiteren Erläuterung und zum besseren Verständnis der Erfindung Ausführungsbeispiele von nach dem erfindungsgemäßen Verfahren arbeitenden Vorrichtungen unter Bezugnahme auf die beigefügten Zeichnungen näher beschrieben.
Figur 1 zeigt anhand eines Blockschemas den grundsätzlichen Aufbau einer als Maschineneinheit 1 ausgebildeten Vorrichtung der erfindungsgemäßen Art, bestehend aus Schneideinrichtung 2, Aufschließeinrichtung 3 und Trenneinrichtung 4,
Figur 2 zeigt schematisch eine Ausführungsform der Schneideinrichtung 2,
Figur 3 zeigt schematisch eine Ausführungsform der Aufschließeinrichtung 3,
Figur 4 zeigt schematisch eine erste Ausführungsform einer dreistufig ausgebildeten Trenneinrichtung 4,
Figur 5 zeigt schematisch eine zweite Ausführungsform einer zweistufig ausgebildeten Trenneinrichtung 4, und
Figur 6 zeigt schematisch ein Detail einer weiteren Ausführungsform einer Trenneinrichtung 4.

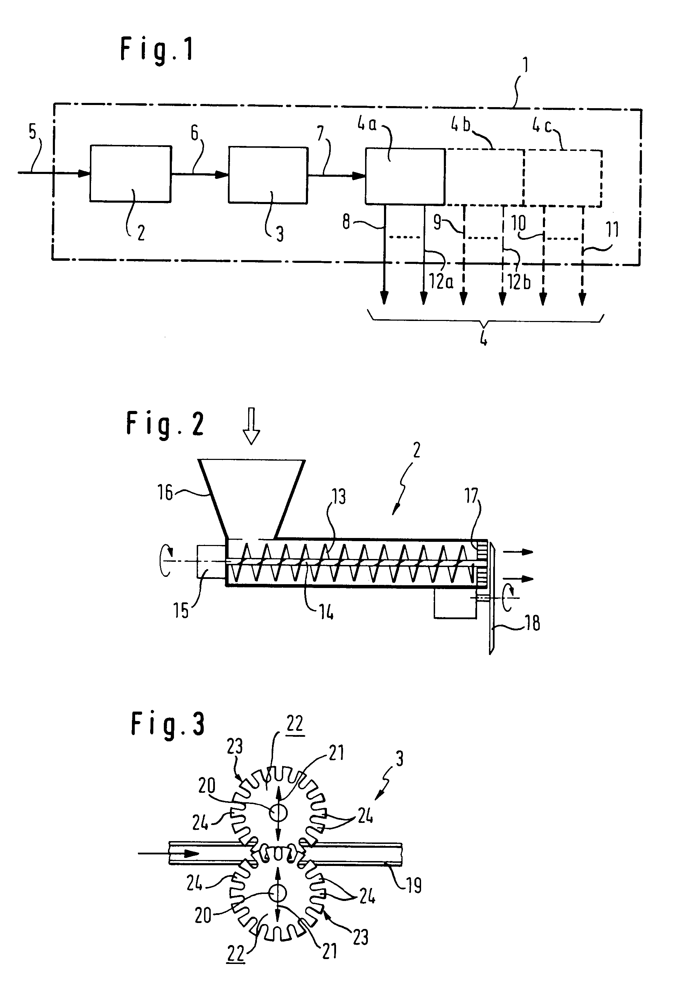

Gemäß dem in Figur 1 dargestellten Blockschema wird das noch alle Bestandteile wie Muskelgewebe, Knochen, Bänder, Knorpel, Faszien, Bindegewebe, Fett und dergleichen aufweisende Fleisch über eine mit einem Pfeil 5 schematisch gekennzeichnete Transporteinrichtung in die Schneideinrichtung 2 eingespeist. In der Schneideinrichtung 2 wird das Fleisch einschließlich seiner Bestandteile in flächige Stücke aufgeteilt. Diese flächigen Stücke werden über eine mit einem Pfeil 6 schematisch gekennzeichnete Fördereinrichtung der Aufschließeinrichtung 3 zugeführt, in der sie nach einem genau vorgegebenen Muster mechanisch aufgeschlossen werden.

Die in dieser Weise mechanisch aufgeschlossenen Stücke gelangen dann über eine mit einem Pfeil 7 gekennzeichnete Fördereinrichtung in die Trenneinrichtung 4, welche aus mindestens einer Stufe 4a bestehen muß. Vorteilhaft ist es jedoch, wenn die Trenneinrichtung 4 aus zwei oder drei Stufen besteht, wie dies im Blockschema gemäß Figur 1 mit gestrichelten Linien dargestellt ist. Die zweite und die dritte Stufe sind im Blockschema gemäß Figur 1 mit 4b und 4c gekennzeichnet. In den Stufen 4a, 4b und 4c erfolgt der eingangs beschriebene Trennvorgang, der aufgrund des vorgeschalteten und genau abgestimmten mechanischen Aufschließvorganges in der Aufschließeinrichtung 3 erfindungsgemäß mit einem sehr hohen Abtrennungsgrad durchgeführt werden kann. Aufgrund dieser Ausgestaltung wird bereits in der ersten Stufe 4a der Trenneinrichtung 4 die Hauptmenge von Muskelgewebe abgetrennt, was im Blockschema gemäß Figur 1 mit einem Pfeil 8 symbolisiert ist. Beim Übergang in die zweite Stufe 4b verbleiben somit lediglich Rest-Muskelgewebe, weiches Bindegewebe, Fettgewebe, Sehnen, Faszien, Bänder, Knorpel und Knochen.

In der zweiten Stufe 4b erfolgt dann ein Abtrennen von Restmuskelgewebe, Fettgewebe und weichem Bindegewebe, was im Blockschema gemäß Figur 1 mit einem Pfeil 9 angedeutet ist. Härteres Bindegewebe, Faszien, Bänder, Knochen und Knorpel verbleiben und werden in die dritte Stufe 4c weitergeleitet. In dieser dritten Stufe erfolgt ein weiteres Abtrennen von Restmuskelgewebe, Restfett und weichem Restbindegewebe, was mit einem Pfeil 10 symbolisch dargestellt wird. Die verbleibenden Sehnen, Knorpel und Knochen werden am Ende der dritten Stufe 4c abgeführt, was mit einem Pfeil 11 in Figur 1 angedeutet ist.

Wie eingangs bereits erwähnt, kann der Abtrennungsgrad im Bedarfsfalle gemäß einer vorteilhaften Weiterbildung der Erfindung noch durch den Einsatz von Zwischenstufen verbessert werden. Diese Zwischenstufen sind in Figur 1 nicht dargestellt. Sie dienen - wie bereits beschrieben - zum Feinseparieren. Die in diesen Zwischenstufen abgetrennten Bestandteile sind im Blockschema gemäß Figur 1 mit den Pfeilen 12a und 12b schematisch angedeutet.

Das in Figur 2 dargestellte Ausführungsbeispiel einer Schneideinrichtung 2 besteht aus einem Schneckenförderer 13, der über eine Antriebswelle 14 und einen Antrieb 15 das über einen Trichter 16 eingespeiste Fleisch schonend abgabeseitig durch ein Gattermesser 17 hindurchpreßt. Gattermesser sind grundsätzlich bekannt und erzeugen Fleischstücke genauer geometrischer Abmessung, die dann durch ein nachgeschaltetes rotierendes Messer 18 auf eine gewünschte Länge geschnitten werden.

Erfindungsgemäß erfolgt das Aufteilen des Fleisches in der Schneideinrichtung 2 in flächige Stücke definierter Dicke.

In Figur 3 ist schematisch ein Ausführungsbeispiel einer Aufschließeinrichtung 3 dargestellt, in der die flächigen Stücke bestimmter Dicke gemäß einem genau vorgegebenen Muster mechanisch aufgeschlossen werden.

Im vorliegenden Ausführungsbeispiel umfaßt die Aufschließeinrichtung 3 eine Transporteinrichtung 19, welche der Einfachheit halber kanalartig dargestellt ist.

Zu beiden Seiten der Transporteinrichtung 19 sind Antriebswellen 20 vorgesehen, die in Richtung von Pfeilen 21 aufeinander zu- oder voneinander wegbewegt werden können. Auf den Antriebswellen 20 sind Zahnscheiben 22 axial nebeneinander angeordnet, so daß Aufschließwalzen 23 gebildet werden, die von beiden Seiten auf die flächigen Stücke bestimmter Dicke einwirken. Die Zahnscheiben 22 sind in ihrem Umfangsbereich mit Einstich- oder Einschnittzähnen 24 ausgestattet, die entsprechend dem bereits erwähnten Aufschließmuster geformt und zueinander angeordnet sind.

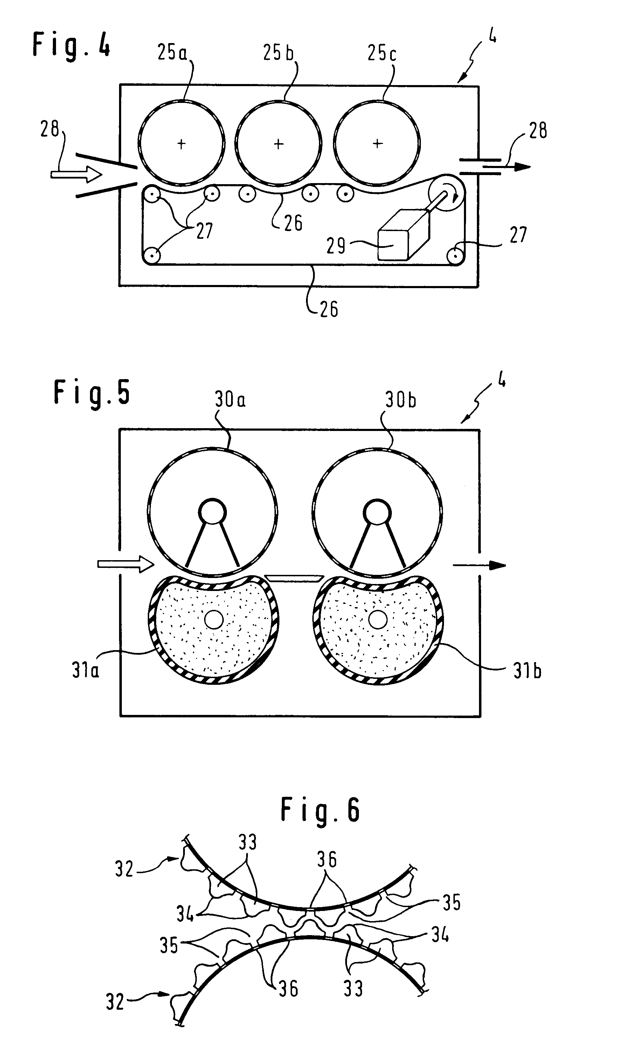

Bei der in Figur 4 schematisch dargestellten Trenneinrichtung 4 handelt es sich um eine dreistufige Siebtrommel-Preßbandanordnung. Im vorliegenden Ausführungsbeispiel sind dabei mit zueinander parallelen Achsen drei Siebtrommeln 25a, 25b und 25c in einem gewissen Abstand hintereinander angeordnet. Auf der Unterseite der Siebtrommeln 25a, 25b, 25c ist ein Preßband 26 über Rollen 27 derart geführt, daß die in der Aufschließeinrichtung 3 mechanisch aufgeschlossenen flächigen Fleischstücke hintereinander zuerst unter der Siebtrommel 25a und im folgenden dann unter den Siebtrommeln 25b und 25c hindurchgeführt werden. Die Arbeitsrichtung der in Figur 4 dargestellten Trenneinrichtung ist durch Pfeile 28 angedeutet. Das Preßband 26 wird über einen Antrieb 29 oder mehrere Antriebspreßwalzen angetrieben. Der Antrieb der Siebtrommeln ist nicht dargestellt.

Die Größe der Perforation der Siebtrommeln, die Länge des Preßspaltes zwischen Preßband 26 und zugeordneter Siebtrommeloberfläche, die Höhe des Preßspaltes und der Druck auf die flächigen Fleischstücke werden den jeweiligen Anforderungen entsprechend durch Versuche für die jeweilige Fleischart und -konsistenz in bekannter Weise bestimmt und eingestellt. Während die härteren Fleischbestandteile die Trenneinrichtung 4 ausgangsseitig über das Preßband 26 verlassen, werden die weicheren Fleischbestandteile aus dem Innenraum der Siebtrommeln in an sich bekannter Weise durch nicht dargestellte Schab- bzw. Fördereinrichtungen abgezogen.

Bei der in Figur 5 schematisch dargestellten zweistufigen Trenneinrichtung 4 werden ebenfalls Siebtrommeln 30a und 30b eingesetzt. Anstelle eines Preßbandes liegen den Siebtrommeln 30a und 30b jedoch Druckwalzen 31a und 31b gegenüber, die aus einem elastisch deformierbaren Material, wie beispielsweise Spezialgummi oder Kunststoff hergestellt und als hohler Druckkörper ausgestaltet sind. Durch nicht dargestellt Einrichtungen sind die hohlen Druckkörper auf ihrer Innenseite mit einem Druckmedium, wie beispielsweise Luft oder Flüssigkeit beaufschlagt.

Wie aus der Figur 5 hervorgeht, ist die Anordnung dabei derart getroffen, daß die Druckwalzen 31a und 31b die Siebtrommeln 30a und 30b über einen bestimmten Winkel ihres Umfanges umschließen. Der Winkel wird entsprechend dem jeweils zu verarbeitenden Fleisch und den Abmessungen der flächigen Stücke gewählt und beträgt vorzugsweise zwischen 30° und 50°. Der Preßdruck wiederum kann über den Druck des Druckmediums gesteuert werden. Ansonsten arbeitet die Ausführungsvariante gemäß Figur 5 in der gleichen Weise wie die Ausführungsform gemäß Figur 4.

In Figur 6 ist ein Detail einer weiteren Ausführungsform dargestellt. Der Arbeitsspalt, durch den die in der Aufschließeinrichtung 3 mechanisch aufgeschlossenen flächigen Fleischstücke bestimmter Dicke eingeführt werden, ist bei dieser Ausführungsform durch den Spalt zwischen zwei Zahntrommeln 32 gebildet, von denen lediglich schematisch ein Teil des Umfanges dargestellt ist. Diese Zahntrommeln 32 besitzen im Bereich ihres Umfanges abgerundete Zähne 33. Diese Zähne besitzen abgerundete Zahnspitzen 34. Zwischen zwei Zähnen 33 ist ein entsprechend der Formgebung der gegenüberliegenden Zahnspitzen 34 ausgebildeter Zahngrund 35 vorgesehen, der Öffnungen oder Schlitze 36 aufweist, durch die eine Verbindung von der Zahntrommelumfangsfläche zum Innenraum hergestellt ist. Bei den Zahntrommeln 32 handelt es sich somit um Siebtrommeln mit gezahnter Umfangsfläche.

Die Zahntrommeln 32 jedes Zahntrommelpaares sind zur Bildung des Arbeitsspaltes im Abstand zueinander angeordnet, wie dies aus Figur 6 ersichtlich ist. Sie sind synchron angetrieben, und zwar in der Weise, daß jeweils die Zahnspitze 34 einer Zahntrommel dem Zahngrund 35 der benachbarten Zahntrommel gegenüberliegt. Dadurch wird ein "wellenförmiger" Arbeitsspalt gebildet, wie dies aus Figur 6 gut erkennbar ist. Die weichen Bestandteile des Fleisches werden über die Öffnungen oder Schlitze 36 in den Innenraum der Zahntrommeln ausgepreßt und dann aus dieser in bekannter weise abgezogen. Die Besonderheit dieser Anordnung liegt jedoch darin, daß der Auspreßvorgang abwechselnd, und somit pulsierend zu der einen und zu der anderen Seite erfolgt, während das Fleisch durch den wellenförmigen Arbeitsspalt hindurchbewegt wird. Durch eine derartige Anordnung ergibt sich bei schonender Behandlung ein besonders guter Abtrennungsgrad.

## Patentansprüche

1. Verfahren zum Aufbereiten von Fleisch, wobei das Fleisch in einem ersten Schritt zerkleinert und in einem anschließenden weiteren Schritt einem ein- oder mehrstufigen Trennvorgang unterzogen wird, dadurch gekennzeichnet,
- daß das Zerkleinern im ersten Schritt durch Aufteilen des Fleisches in flächige Stücke bestimmter Dicke erfolgt,
- und daß in einem zwischen dem ersten und dem weiteren Schritt liegenden zweiten Schritt ein auf den Trennvorgang abgestimmtes mechanisches Aufschließen der flächigen Stücke vorgenommen wird, sodaß ihre Struktur gezielt aufgebrochen wird.

2. Verfahren nach Anspruch 1, dadurch gekennzeichnet, daß der an den mechanischen Aufschließvorgang anschließende Trennvorgang über zwei oder drei Stufen erfolgt.

3. Verfahren nach Anspruch 2, dadurch gekennzeichnet, daß der auf das Fleisch während des Trennvorgangs aufgebrachte Druck von Stufe zu Stufe erhöht wird.

4. Verfahren nach Anspruch 2, dadurch gekennzeichnet, daß ein vergleichsweise hoher spezifischer Druck über einen relativ kurzen Zeitraum auf das Fleisch einwirkt.

5. Verfahren nach Anspruch 3, dadurch gekennzeichnet, daß der Druck über Flächen auf das Fleisch ausgeübt wird, deren Abstand einstellbar ist und von Stufe zu Stufe abnimmt.

6. Verfahren nach Anspruch 1 oder 2, dadurch gekennzeichnet, daß zum Feinseparieren zumindest zwischen dem mechanischen Aufschließvorgang und dem anschließenden Trennvorgang eine zwischenstufe vorgesehen ist.

7. Verfahren nach Anspruch 2, dadurch gekennzeichnet, daß zum Feinseparieren zumindest zwischen zwei Stufen eine Zwischenstufe vorgesehen ist.

8. Verfahren nach Anspruch 6 oder 7, dadurch gekennzeichnet, daß die Zwischenstufe als Flotationsstufe arbeitet.

9. Verfahren nach Anspruch 6 oder 7, dadurch gekennzeichnet, daß die Zwischenstufe als Windsichtungsstufe arbeitet.

10. Verfahren nach Anspruch 6 oder 7, dadurch gekennzeichnet, daß die Zwischenstufe als optische Separierungsstufe arbeitet.

11. Verfahren nach Anspruch 6 oder 7, dadurch gekennzeichnet, daß die Zwischenstufe nach dem Adhäsionstrennverfahren arbeitet.

12. Verfahren nach Anspruch 6 oder 7, dadurch gekennzeichnet, daß die Zwischenstufe nach dem Rütteltischtrennverfahren arbeitet.

13. Verfahren nach Anspruch 6 oder 7, dadurch gekennzeichnet, daß die Zwischenstufe nach dem Zentrifugaltrennverfahren arbeitet.

14. Vorrichtung zur Durchführung des Verfahrens nach Anspruch 1 oder 2, dadurch gekennzeichnet, daß die Vorrichtung eine Schneideinrichtung (2) zum Aufteilen des Fleisches in flächige Stücke bestimmter Dicke, eine an diese anschließende mechanische Aufschließeinrichtung (3) die die Struktur den flächigen Stücke gezielt aufbricht und die sich an diese Aufschließeinsichtung (3) anschließende und darauf abgestimmte ein- oder mehrstufige Trenneinrichtung (4) aufweist.

15. Vorrichtung nach Anspruch 14, dadurch gekennzeichnet, daß die Schneideinrichtung (2), die Aufschließeinrichtung (3) und die Trenneinrichtung (4) hintereinander geschaltet sind.

16. Vorrichtung nach Anspruch 15, dadurch gekennzeichnet, daß die Schneideinrichtung (2), die Aufschließeinrichtung (3) und die Trenneinrichtung (4) zu einer Maschineneinheit (1) zusammengefaßt sind.

17. Vorrichtung nach Anspruch 14, dadurch gekennzeichnet, daß die Schneideinrichtung (2) einen Schneckenförderer (13) mit ausgabeseitig vorgeschaltetem, rotierenden Messer (18) aufweist.

18. Vorrichtung nach Anspruch 14, dadurch gekennzeichnet, daß die Schneideinrichtung (2) einen Schneckenförderer (13) mit ausgabeseitig vorgeschaltetem, einfachem oder doppeltem Gattermesser aufweist.

19. Vorrichtung nach Anspruch 17, dadurch gekennzeichnet, daß dem rotierenden Messer (18) ein Gattermesser (17) vorgeschaltet ist.

20. Vorrichtung nach Anspruch 14, dadurch gekennzeichnet, daß die Schneideinrichtung (2) eine auf einer horizontalen Achse geführte und mit einem Transportband zusammenarbeitende Scheibenmesseranordnung umfaßt.

21. Vorrichtung nach Anspruch 14, dadurch gekennzeichnet, daß die Schneideinrichtung als Gefrierfleischblockschneider ausgebildet ist.

22. Vorrichtung nach Anspruch 21, dadurch gekennzeichnet, daß der Gefrierfleischblockschneider als Säge- oder Fräseinrichtung ausgebildet ist.

23. Vorrichtung nach Anspruch 14, dadurch gekennzeichnet, daß die Aufschließeinrichtung (3) einander gegenüberliegende und gegenläufig rotierende Aufschließwalzen (23) aufweist.

24. Vorrichtung nach Anspruch 23, dadurch gekennzeichnet, daß die flächigen Fleischstücke zwischen den Aufschließwalzen (23) über eine Transporteinrichtung (19) hindurchförderbar sind.

25. Vorrichtung nach Anspruch 23, dadurch gekennzeichnet, daß die Achsen der Aufschließwalzen (23) in einer horizontalen Ebene liegen und die flächigen Fleischstücke durch Schwerkraft zwischen den Aufschließwalzen hindurchförderbar sind.

26. Vorrichtung nach Anspruch 14, daß die Aufschließeinrichtung (3) eine Aufschließwalze und ein mit dieser zusammenarbeitendes Förderband aufweist.

27. Vorrichtung nach Anspruch 23, 24, 25 oder 26, dadurch gekennzeichnet, daß die Aufschließwalzen (23) Antriebswellen (20) umfassen, auf denen axial nebeneinander eine Anzahl von Zahnscheiben (22) angeordnet sind.

28. Vorrichtung nach Anspruch 27, dadurch gekennzeichnet, daß die Antriebswellen (20) abstandsverstellbar nebeneinander angeordnet sind.

29. Vorrichtung nach Anspruch 27, dadurch gekennzeichnet, daß die Zahnscheiben (22) zu Zahnscheibensätzen zusammenstellbar sind.

30. Vorrichtung nach Anspruch 27, 28 oder 29, dadurch gekennzeichnet, daß die Zahnscheiben (22) auf den Trennvorgang in der nachgeschalteten Trenneinrichtung (4) abgestimmte Einstich- oder Einschnittzähne (24) aufweisen.

31. Vorrichtung nach Anspruch 14, dadurch gekennzeichnet, daß die Trenneinrichtung (4) mindestens eine Preßband-Siebtrommeleinheit aufweist.

32. Vorrichtung nach Anspruch 14, dadurch gekennzeichnet, daß die Trenneinrichtung (4) mindestens eine Siebband-Preßtrommeleinheit aufweist.

33. Vorrichtung nach Anspruch 14, dadurch gekennzeichnet, daß die Trenneinrichtung (4) mindestens eine Siebtrommel (30a, 30b) aufweist, der jeweils eine Druckwalze (31a, 31b) achsparallel gegenüberliegt.

34. Vorrichtung nach Anspruch 14, dadurch gekennzeichnet, daß die Trenneinrichtung (4) mindestens eine Siebtrommel-Siebtrommeleinheit aufweist.

35. Vorrichtung nach Anspruch 14, dadurch gekennzeichnet, daß die Trenneinrichtung (4) eine Druck- oder Siebtrommel und eine in deren Innenraum achsversetzt rotierende Sieb- oder Drucktrommel kleineren Durchmessers aufweist.

36. Vorrichtung nach Anspruch 33, dadurch gekennzeichnet, daß die Druckwalze (31a, 31b) aus elastischem Material besteht.

37. Vorrichtung nach Anspruch 36, dadurch gekennzeichnet, daß die Druckwalze (31a, 31b) elastisch verformbar ausgebildet ist.

38. Vorrichtung nach Anspruch 37, dadurch gekennzeichnet, daß die Druckwalze über einen Winkelbereich von etwa 30° bis 50° die Siebtrommel (30a, 30b) überdeckt.

39. Vorrichtung nach Anspruch 37 oder 38, dadurch gekennzeichnet, daß die Druckwalze (31a, 31b) als hohler Druckkörper ausgebildet ist und auf der Innenseite mit einem Druckmedium beaufschlagt ist.

40. Vorrichtung nach Anspruch 36 bis 39, dadurch gekennzeichnet, daß die Siebtrommel (30a, 30b) auf ihrer Innenseite im Bereich der Überdeckung durch die Druckwalzen (31a, 31b) mit einer Saugeinrichtung ausgestattet ist.

41. Vorrichtung nach Anspruch 40, dadurch gekennzeichnet, daß die Saugeinrichtung als Saughaube ausgebildet ist.

42. Vorrichtung nach Anspruch 14, dadurch gekennzeichnet, daß die Trenneinrichtung (4) mindestens ein Zahntrommelpaar aufweist.

43. Vorrichtung nach Anspruch 42, dadurch gekennzeichnet, daß die Zahntrommeln (32) des Zahntrommelpaares im Zangrund (35) mit dem Trommelinnenraum in Verbindung stehende Öffnungen oder Schlitze (36) besitzen.

44. Vorrichtung nach Anspruch 42 oder 43, dadurch gekennzeichnet, daß die Zahntrommeln (32) gerad-, schräg- oder pfeilverzahnt sind.

45. Vorrichtung nach Anspruch 42, dadurch gekennzeichnet, daß die Zähne der Zahntrommeln von Zahnleisten gebildet sind.

46. Vorrichtung nach Anspruch 43, dadurch gekennzeichnet, daß die mit dem Trommelinnenraum in Verbindung stehenden Öffnungen oder Schlitze (36) sich zum Trommelinnenraum hin erweitern.

47. Vorrichtung nach Anspruch 46, dadurch gekennzeichnet, daß die Erweiterung im wesentlichen konisch gestaltet ist.

48. Vorrichtung nach Anspruch 46 oder 47, dadurch gekennzeichnet, daß der Übergang der Öffnungen oder Schlitze (36) auf die Trommelumfangsfläche schneidenartig ausgebildet ist.

49. Vorrichtung nach Anspruch 42, 43 oder 44, dadurch gekennzeichnet, daß die Zahntrommeln (32) im Abstand voneinander angeordnet und synchron jeweils Zahnspitze (34) gegenüber Zahngrund (35) angetrieben sind.

## Claims

1. Method for preparing meat, wherein the meat is comminuted in a first step and subjected to a single-stage or multi-stage separation process in a subsequent further step, characterised
- in that comminution in the first step takes place by division of the meat into plane pieces with a given thickness,
- and in that in a second step between the first step and the further step, mechanical disintegration of the plane pieces coordinated with the separation process is performed, so that their structure is broken up selectively.

2. Method according to claim 1, characterised in that the separation process following the mechanical disintegration process takes place over two or three stages.

3. Method according to claim 2, characterised in that the pressure applied to the meat during the separation process is increased from one stage to the next.

4. Method according to claim 2, characterised in that a comparatively high specific pressure acts on the meat over a relatively short period.

5. Method according to claim 3, characterised in that the pressure is applied to the meat via surfaces of which the spacing is adjustable and decreases from one stage to the next.

6. Method according to claim 1 or 2, characterised in that for fine separation, at least between the mechanical disintegration process and the subsequent separation process an intermediate stage is provided.

7. Method according to claim 2, characterised in that for fine separation, at least between two stages an intermediate stage is provided.

8. Method according to claim 6 or 7, characterised in that the intermediate stage operates as a flotation stage.

9. Method according to claim 6 or 7, characterised in that the intermediate stage operates as an air classification stage.

10. Method according to claim 6 or 7, characterised in that the intermediate stage operates as a visual separation stage.

11. Method according to claim 6 or 7, characterised in that the intermediate stage operates by the adhesion separation method.

12. Method according to claim 6 or 7, characterised in that the intermediate stage operates by the vibrating table separation method.

13. Method according to claim 6 or 7, characterised in that the intermediate stage operates by the centrifugal separation method.

14. Apparatus for carrying out the method according to claim 1 or 2, characterised in that the apparatus comprises a cutting device (2) for dividing the meat into plane pieces with a given thickness, a mechanical disintegrating device (3) which follows the latter and which breaks up the structure of the plane pieces selectively, and a single-stage or multi-stage separating device (4) which follows this disintegrating device (3) and is coordinated therewith.

15. Apparatus according to claim 14, characterised in that the cutting device (2), the disintegrating device (3) and the separating device (4) are arranged one behind the other.

16. Apparatus according to claim 15, characterised in that the cutting device (2), the disintegrating device (3) and the separating device (4) are combined into a machine unit (1).

17. Apparatus according to claim 14, characterised in that the cutting device (2) comprises a screw conveyor (13) with a rotating blade (18) mounted in front on the output side.

18. Apparatus according to claim 14, characterised in that the cutting device (2) comprises a screw conveyor (13) with a single or double frame saw blade mounted in front on the output side.

19. Apparatus according to claim 17, characterised in that a frame saw blade (17) is mounted in front of the rotating blade (18).

20. Apparatus according to claim 14, characterised in that the cutting device (2) includes a disc blade assembly guided on a horizontal axis and cooperating with a conveyor belt.

21. Apparatus according to claim 14, characterised in that the cutting device is constructed as a frozen meat block cutter.

22. Apparatus according to claim 21, characterised in that the frozen meat block cutter is constructed as a sawing or milling device.

23. Apparatus according to claim 14, characterised in that the disintegrating device (3) comprises mutually opposed, counterrotating disintegrating rollers (23).

24. Apparatus according to claim 23, characterised in that the plane pieces of meat can be transported through between the disintegrating rollers (23) via a transport device (19).

25. Apparatus according to claim 23, characterised in that the axes of the disintegrating rollers (23) lie in a horizontal plane, and the plane pieces of meat can be transported through between the disintegrating rollers by force of gravity.

26. Apparatus according to claim 14, characterised in that the disintegrating device (3) comprises a disintegrating roller and a conveyor belt cooperating therewith.

27. Apparatus according to claim 23, 24, 25 or 26, characterised in that the disintegrating rollers (23) include drive shafts (20) on which a number of toothed discs (22) are arranged axially adjacent to each other.

28. Apparatus according to claim 27, characterised in that the drive shafts (20) are arranged adjacent to each other with adjustable spacing.

29. Apparatus according to claim 27, characterised in that the toothed discs (22) can be combined into toothed disc assemblies.

30. Apparatus according to claim 27, 28 or 29, characterised in that the toothed discs (22) comprise recess or notch teeth (24) coordinated with the separation process in the subsequent separation device (4).

31. Apparatus according to claim 14, characterised in that the separation device (4) comprises at least one press belt/screen drum unit.

32. Apparatus according to claim 14, characterised in that the separation device (4) comprises at least one screen belt/press drum unit.

33. Apparatus according to claim 14, characterised in that the separation device (4) comprises at least one screen drum (30a, 30b), opposite each of which is located a pressure roller (31a, 31b) with parallel axis.

34. Apparatus according to claim 14, characterised in that the separation device (4) comprises at least one screen drum/screen drum unit.

35. Apparatus according to claim 14, characterised in that the separation device (4) comprises a pressure or screen drum, and a screen or pressure drum of smaller diameter rotating with offset axis in the interior thereof.

36. Apparatus according to claim 33, characterised in that the pressure roller (31a, 31b) is made of resilient material.

37. Apparatus according to claim 36, characterised in that the pressure roller (31a, 31b) is elastically deformable.

38. Apparatus according to claim 37, characterised in that the pressure roller overlaps the screen drum (30a, 30b) over an angular range of about 30° to 50°.

39. Apparatus according to claim 37 or 38, characterised in that the pressure roller (31a, 31b) is constructed as a hollow pressure body and subjected to a pressure medium on the inside.

40. Apparatus according to claims 36 to 39, characterised in that the screen drum (30a, 30b) is equipped with a suction device on the inside thereof in the region of overlap by the pressure rollers (31a, 31b).

41. Apparatus according to claim 40, characterised in that the suction device is constructed as a suction hood.

42. Apparatus according to claim 14, characterised in that the separation device (4) comprises at least one pair of toothed drums.

43. Apparatus according to claim 42, characterised in that the toothed drums (32) of the pair of toothed drums have, in the tooth bottom (35), openings or slots (36) communicating with the interior of the drum.

44. Apparatus according to claim 42 or 43, characterised in that the toothed drums (32) have spur, helical or herringbone teeth.

45. Apparatus according to claim 42, characterised in that the teeth of the toothed drums are formed by toothed strips.

46. Apparatus according to claim 43, characterised in that the openings or slots (36) communicating with the interior of the drum widen towards the interior of the drum.

47. Apparatus according to claim 46, characterised in that the widened portion is essentially conically shaped.

48. Apparatus according to claim 46 or 47, characterised in that the transition from the openings or slots (36) to the circumferential surface of the drum is constructed as a cutting edge.

49. Apparatus according to claim 42, 43 or 44, characterised in that the toothed drums (32) are arranged at a distance from each other and driven with synchronisation of each tooth tip (34) relative to tooth bottom (35).

## Revendications

1. Procédé de traitement de viande, la viande étant, dans une première étape, fractionnée et, dans une autre étape, subséquente, soumise à un processus de séparation, lui-même effectué en une ou plusieurs étapes caractérisé en ce que,
- le fractionnement s'effectue à la première étape par subdivision de la viande en morceaux plats d'épaisseur déterminée,
- et en ce que, dans une deuxième étape, située entre la première étape et l'autre étape subséquente, est effectuée une préparation mécanique, adaptée au processus de séparation, des morceaux plats, de sorte que leur structure soit cassée, à dessein.

2. Procédé selon la revendication 1, caractérisé en ce que le processus de séparation subséquent au processus de préparation mécanique s'effectue en deux ou trois étapes.

3. Procédé selon la revendication 2, caractérisé en ce que la pression, appliquée sur la viande pendant le processus de séparation, est augmentée d'une étape à l'autre.

4. Procédé selon la revendication 2, caractérisé en ce qu'une pression spécifique comparativement élevée agit sur la viande pendant un intervalle de temps relativement court.

5. Procédé selon la revendication 3, caractérisé en ce que la pression est exercée sur la viande par des surfaces, dont l'espacement est réglable et va en diminuant d'une étape à l'autre.

6. Procédé selon la revendication 1 ou 2, caractérisé en ce que, pour effectuer la séparation fine, au moins une étape intermédiaire est prévue entre le processus de préparation mécanique et le processus de séparation subséquent.

7. Procédé selon la revendication 2, caractérisé en ce qu'au moins un étage intermédiaire est prévu entre les deux étapes pour effectuer la séparation fine.

8. Procédé selon la revendication 6 ou 7, caractérisé en ce que l'étape intermédiaire travaille comme étape de flottation.

9. Procédé selon la revendication 6 ou 7, caractérisé en ce que l'étape intermédiaire travaille comme étape de tamisage aéro-séparateur.

10. Procédé selon la revendication 6 ou 7, caractérisé en ce que l'étape intermédiaire travaille comme étape de séparation optique.

11. Procédé selon la revendication 6 ou 7, caractérisé en ce que l'étage intermédiaire travaille selon le procédé de séparation-adhésion.

12. Procédé selon la revendication 6 ou 7, caractérisé en ce que l'étage intermédiaire travaille selon le procédé de séparation à table vibrante.

13. Procédé selon la revendication 6 ou 7, caractérisé en ce que l'étape intermédiaire travaille selon le procédé de séparation centrifuge.

14. Dispositif pour mettre en oeuvre le procédé selon la revendication 1 ou 2, caractérisé en ce que le dispositif présente un dispositif de coupe (2), pour subdiviser la viande en morceaux plats d'épaisseur déterminée, un dispositif de préparation mécanique (3), lui étant connexe, cassant à dessein la structure des morceaux plats, et un dispositif de séparation (4) en un ou plusieurs étages, se raccordant à ce dispositif de préparation (3) et adapté en fonction de celui-ci.

15. Dispositif selon la revendication 14, caractérisé en ce que le dispositif de coupe (2), le dispositif de préparation (3) et le dispositif de séparation (4) sont mis en circuit les uns derrière les autres.

16. Dispositif selon la revendication 15, caractérisé en ce que le dispositif de coupe (2), le dispositif de préparation (3) et le dispositif de séparation (4) sont groupés pour constituer un ensemble machine (1).

17. Dispositif selon la revendication 14, caractérisé en ce que le dispositif de coupe (2) présente un transporteur à vis (13) équipé d'une lame tournante (18), mise en circuit en amont, côté alimentation.

18. Dispositif selon la revendication 14, caractérisé en ce que le dispositif de coupe (2) présente un transporteur à vis (13) équipé d'une lame râtelier, simple ou double, mise en circuit en amont, côté alimentation.

19. Dispositif selon la revendication 17, caractérisé en ce qu'une lame râtelier (17) est mise en circuit en amont de la lame tournante (18).

20. Dispositif selon la revendication 14, caractérisé en ce que le dispositif de coupe (2) comprend un dispositif à lame disque, guidé sur un axe horizontal et coopérant avec une bande de transport.

21. Dispositif selon la revendication 14, caractérisé en ce que le dispositif de coupe est réalisé sous forme de trancheur de blocs de viande congelée.

22. Dispositif selon la revendication 21, caractérisé en ce que le trancheur de blocs de viande congelée est réalisé sous forme de dispositif de sciage ou de fraisage.

23. Dispositif selon la revendication 14, caractérisé en ce que le dispositif de préparation (3) présente des rouleaux de préparation (23) placés en regard les uns des autres et tournant en sens inverse.

24. Dispositif selon la revendication 23, caractérisé en ce que les morceaux de viande plats peuvent être transportés entre les rouleaux de préparation (23) par l'intermédiaire d'un dispositif de transport (19).

25. Dispositif selon la revendication 23, caractérisé en ce que les axes des rouleaux de préparation (23) sont situés dans un plan horizontal et les morceaux de viande plats peuvent être transportés sous l'effet de la gravité entre les rouleaux de préparation.

26. Dispositif selon la revendication 14, caractérisé en ce que le dispositif de préparation (3) présente un rouleau de préparation et une bande transporteuse coopérant avec celui-ci.

27. Dispositif selon la revendication 23, 24, 25 ou 26, caractérisé en ce que les rouleaux de préparation (23) comprennent des arbres d'entraînement (20), sur lesquels sont disposés, axialement, les uns à côté des autres, un certain nombre de disques dentés (22).

28. Dispositif selon la revendication 27, caractérisé en ce que les arbres d'entraînement (20) sont disposés les uns à côté des autres avec un espacement réglable.

29. Dispositif selon la revendication 27, caractérisé en ce que les disques dentés (22) peuvent être groupés ensemble pour constituer des jeux de disques dentés.

30. Dispositif selon la revendication 27, 28 ou 29 caractérisé en ce que les disques dentés (22) présentent des dents de piquage ou d'entaillage (22) conçues pour le processus de séparation dans le dispositif de séparation (4) mis en circuit en aval.

31. Dispositif selon la revendication 14, caractérisé en ce que le dispositif de séparation (4) présente au moins un ensemble bandes de pressage-tambour de tamisage.

32. Dispositif selon la revendication 14, caractérisé en ce que le dispositif de séparation (4) présente au moins un ensemble bandes de tamisage-tambour de pressage.

33. Dispositif selon la revendication 14, caractérisé en ce que le dispositif de séparation (4) présente au moins un tambour de tamisage (30a, 30b) situé en regard, avec son axe orienté parallèlement, d'un rouleau de pressage (31a, 31b) respectif.

34. Dispositif selon la revendication 14, caractérisé en ce que le dispositif de séparation (4) présente au moins un ensemble tambour de tamisage-tambour de tamisage.

35. Dispositif selon la revendication 14, caractérisé en ce que le dispositif de séparation (4) présente un tambour de pressage ou de tamisage et un tambour de tamisage ou de pressage, tournant avec un axe décalé dans son espace intérieur et présentant un diamètre plus petit.

36. Dispositif selon la revendication 33, caractérisé en ce que le rouleau de pressage (31a, 31b) est en matériau élastique.

37. Dispositif selon la revendication 36, caractérisé en ce que le rouleau de pressage (31a, 31b) est déformable élastiquement.

38. Dispositif selon la revendication 37, caractérisé en ce que le rouleau de pressage couvre le tambour de tamisage (30a, 30b) sur une plage angulaire d'à peu près 30 à 50°.

39. Dispositif selon la revendication 37 ou 38, caractérisé en ce que le rouleau de pressage (31a, 31b) est réalisé sous forme de corps de pressage creux et peut être alimenté avec un fluide sous pression du côté intérieur.

40. Dispositif selon les revendications 36 à 39, caractérisé en ce que les tambours de tamisage (30a, 30b) sont équipés, du côté intérieur, d'un dispositif d'aspiration, dans la zone du recouvrement par les rouleaux de pressage (31a, 31b).

41. Dispositif selon la revendication 40, caractérisé en ce que le dispositif d'aspiration est réalisé sous forme de hotte d'aspiration.

42. Dispositif selon la revendication 14, caractérisé en ce que le dispositif de séparation (4) présente au moins une paire de tambours dentés.

43. Dispositif selon la revendication 42, caractérisé en ce que les tambours dentés (32) de la paire de tambours dentés comportent, au fond de dent (35), des ouvertures ou fentes (36) reliées à l'espace intérieur des tambours.

44. Dispositif selon la revendication 42 ou 43, caractérisé en ce que les tambours dentés (32) sont pourvus d'une denture rectiligne, oblique, ou en chevrons.

45. Dispositif selon la revendication 42, caractérisé en ce que les dents des tambours dentés (32) sont constituées par des bandes de denture.

46. Dispositif selon la revendication 43, caractérisé en ce que les ouvertures ou fentes (36) reliées à l'espace intérieur de tambours vont en s'agrandissant en direction de l'espace intérieur du tambour.

47. Dispositif selon la revendication 46, caractérisé en ce que l'agrandissement est de forme sensiblement conique.

48. Dispositif selon la revendication 46 ou 47, caractérisé en ce que la transition entre les ouvertures ou les fentes (36) est réalisée en forme de tranchants, situées sur la surface périphérique de tambour.

49. Dispositif selon la revendication 42, 43 ou 44 caractérisé en ce que les tambours dentés (32) sont disposés à distance les uns des autres et entraînées de façon synchrone, chaque fois pour une pointe de dents (34) par rapport à un fond de dent (35).
